# EUROPEAN PATENT SPECIFICATION

(11) **EP 2 213 484 B1**
(45) Date of publication and mention of the grant of the patent: **31.07.2013**
(21) Application number: 08840448.8
(22) Date of filing: 20.10.2008
(51) Int. Cl.: B60C 15/00, B60C 15/06

(54) **PNEUMATIC TIRE**
LUFTREIFEN
PNEU

(30) Priority: 19.10.2007 JP 2007272138; 08.11.2007 JP 2007290436
(43) Date of publication of application: 04.08.2010
(73) Proprietor: Bridgestone Corporation, Tokyo 104-8340 (JP)
(72) Inventor: KURITA, Keiichi, Kodaira-shi Tokyo 187-8531 (JP); TODA, Seiichi, Kodaira-shi Tokyo 187-8531 (JP)
(74) Representative: Waldren, Robin Michael
(86) International application number: PCT/JP2008/068988
(87) International publication number: WO 2009/051260

(56) References cited:
- JP-A- 6 032 122
- JP-A- 6 032 122
- JP-A- 10 193 924
- JP-A- 2000 185 530
- JP-A- 2000 185 530
- JP-A- 2000 301 916
- JP-A- 2004 189 192
- JP-A- 2007 069 668

## Description

### TECHNICAL FIELD

The present invention relates to a pneumatic tire, in particular a pneumatic tire for heavy load vehicles such as trucks, buses and the like, and more specifically, proposes techniques being excellent in the reduction of a tire weight and a rolling resistance and hence an economic efficiency and capable of preventing deterioration of durability at a recess forming position even if the recess is formed in a side rubber for the purpose of reducing the tire weight.

### BACKGROUND ART

In recent years, it is requested to develop a pneumatic tire of low fuel consumption from a viewpoint of environmental care and economic efficiency. As a countermeasure, there is the reduction of the rolling resistance, and as a way therefor, there is the reduction of the tire weight.

For the purpose of reducing the tire weight, when an end count of ply cords as a carcass material is decreased, it is feared that the stiffness of tire skeleton is lowered to deteriorate various motion performances, steering stability and so on of the tire. On the other hand, when a total thickness of rubbers at a sidewall portion and a bead portion of the tire is made thinner, the deterioration of the steering stability and so on is feared in a similar fashion due to the decrease of the stiffness at the sidewall portion and bead portion.

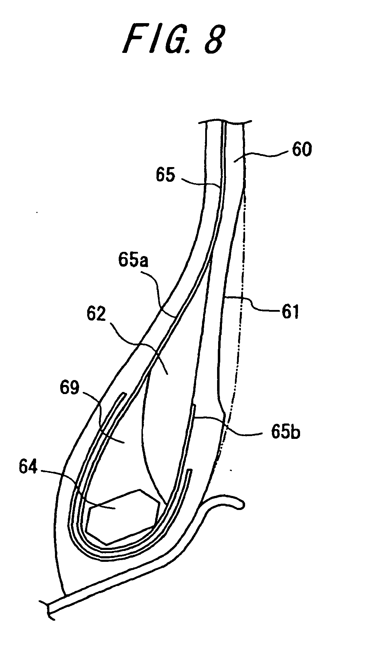

In order to improve the durability to heat buildup of the pneumatic tire and reduce the tire weight, for instance, Patent Document 1 discloses a pneumatic tire wherein a recess 61 is formed in an outer rubber layer between a tire maximum width position and a separation position of an outer surface of the bead portion from a rim flange as shown in FIG. 8 and a total thickness of the tire side part at the recess 61 is larger than the total thickness of the tire side part at the tire maximum width position and a maximum depth of the recess 61 is not less than 1.5 mm to thereby cut the rubber weight to reduce the tire weight but also suppress heat accumulation prevent the deterioration of the outer rubber layer through heat.

In such a pneumatic tire, however, it is particularly unavoidable to ensure a predetermined rubber thickness in the vicinity of an end of a turnup portion 65b of a carcass 65 wound around a bead core 64 for preventing the separation of the carcass due to stepwise difference of the stiffness. Also, since it is required to dispose a stiffener rubber 69 but also a sandwiched rubber 62 embedding both ends thereof between a main body portion 65a and a turnup portion 65b of the carcass 65, there is a limitation on the size, shape and the like of the recess 61 formed in the side rubber 60, and hence the tire weight can not be reduced as is expected. Thus, the above reduction of tire weight is critical, and further modification is desired.

Further, in the pneumatic tire, since a radially inward compression strain and a radially outward tensile strain are repeatedly applied to the position forming the recess 61 during the rotation under load, and hence rubber is easily fatigued at the position forming the recess, so that further modification is desired. Patent Document 1: JP-A-2000-158919
Attention is drawn to the disclosures of JP 6 032122 and JP 2000 185530.

### DISCLOSURE OF THE INVENTION

### PROBLEMS TO BE SOLVED BY THE INVENTION

It is, therefore, an object of the present invention provide a pneumatic tire capable of realizing the reduction of tire weight without deteriorating a pulling resistance of carcass ply cords, and capable of largely contributing to the reduction of rolling resistance and hence fuel consumption, and a pneumatic tire in which the weight reduction of the pneumatic tire is attained by forming a recess in a side rubber at an outside face of the tire but also rubber fatigue resulting from the formation of the recess can be effectively suppressed to prevent effectively the deterioration of durability at the recess forming position, and in particular a pneumatic tire for heavy load vehicle.

### MEANS FOR SOLVING PROBLEM

The pneumatic tire according to the present invention is provided according to claim 1.

The term "approved rim" used herein means a rim stipulated in accordance with the tire size in JATMA (Japan Automotive Tire Manufactures Association standard) Year Book, ETRTO (European Tyre and Rim Technical Organisation) STANDARD MANUAL, TRA (The TIRE and RIM ASSOCIATION INC.) YEAR BOOK and so on.
The term "posture of mounting on an approved rim" used herein means a widthwise sectional posture of the tire at a state that the tire is mounted on an approved rim defined in JATMA or the like and inflated under a maximum air pressure specified according to tire size by the standards of JATMA or the like.
The term "tire maximum width position" used herein means a position of a widthwise sectional posture of the tire at a state that the tire is mounted on an approved rim defined in JATMA or the like and inflated under a maximum air pressure specified according to tire size by the standards of JATMA or the like.

The term "outer face of at least one of the sidewall portion and the bead portion" used herein means to involve an outer face extending over both the sidewall portion and bead portion.
Also, the term "recess comprised of one or more arcs" used herein means to include a recess formed by a combination of plural arcs.

In such a tire, it is more preferable that a radially outer end of the recess in the widthwise section of the tire is positioned within a range of 30-65% of a distance ranging from a line segment passing through an outer edge of a rim flange and extending parallel to a central axis of the tire to the tire maximum width position as measured from the line segment.
At this moment, the radially outer end may be an inflection point, change point, turnoff point of the like of the side rubber.

Also, it is preferable that a radially inner end of the recess is positioned within a range of 3.0-10.0 mm outward from a radially outer end of the turnup portion of the carcass in the widthwise direction of the tire.

It is preferable that a radially outer end of the recess before the mounting on the approved rim is positioned at a contact point with an outer face of the sidewall portion having a convex curved form outward in the widthwise direction at the widthwise section of the tire.
In this case, the term "contact point with an outer face of the sidewall portion having a convex curved form outward in the widthwise direction of the tire" used herein means a point smoothly connecting a recess forming curve to a convex forming curve.

In the posture of mounting the tire on the approved rim, it is preferable that a radially inner end of the recess is positioned within 5-25 mm from an intersecting point of a perpendicular line drawn from an arc center of a rim flange of the approved rim to the main body portion of the carcass with an outer surface of the tire as measured in the tire width direction as measured along the tire outer surface outward in the radial direction.

It is preferable that at least one cord reinforcement layer for the bead core is disposed outside of the carcass along the carcass and a position of a radially outer end of the cord reinforcing layer located inside in the widthwise direction of the tire at the posture of the tire before the mounting on the approved rim is positioned outward from a center of the arc defining the recess in the radial direction.

The term "posture of the tire before the mounting on an approved rim" used herein means a widthwise sectional posture of the tire after the building in a mold through vulcanization. For the purpose of convenience, it means a widthwise sectional posture of the tire specified by a portion located opposite to a road surface at 180° when a single tire is set up.

It is preferable that a position of a radially outer end of the cord reinforcing layer outward in the widthwise direction at the posture of mounting on the approved rim is positioned from an intersecting point of a perpendicular line drawn from an arc center of a rim flange of the approved rim to the main body portion of the carcass with the outer surface of the tire up to a position of not less than 10 mm depart from a line segment drawn parallel to the perpendicular line at a position of a radially outer end of the carcass and inward in a direction perpendicular to the line segment.

The radially outer end of the carcass means the radially outer end of the turnup portion of the carcass or the radially outermost end of the carcass wound portion in the radial direction.

It is preferable that the cord reinforcement layer is a rubberized layer of steel cords and a cord angle of the cord reinforcement layer with respect to the radial direction is 0-45°.

### EFFECT OF THE INVENTION

In the pneumatic tire according to the present invention, a thin-walled recess is formed inward from a tire maximum width position in a radial direction and outward from a radially outer end of the turnup portion of the carcass at a posture of mounting the tire on an approved rim so that a minimum size of rubber gauge in the side rubber as measured in a normal direction drawn from the outermost carcass ply is within a range of 2.5-4.5 mm, whereby the amount of the side rubber used can be decreased to make it thin totally. As a result, the tire weight can be saved.

When the minimum size is less than 2.5 mm, there is a fear that the durability to side cut resulting from external injury such as rubbing with a curb stone or the like is lacking, while when it exceeds 4.5 mm, the distance from the carcass to the tire surface become large, and strain becomes large at the tire surface when the carcass is bent, which tends to become disadvantageous to an ozone crack.

And, in the pneumatic tire according to the present invention, one or more cord reinforcing layers are arranged outside of the carcass along the carcass, whereby the stiffness in the widthwise direction and circumferential direction of the tire can be enhanced to improve the steering stability.

At the posture of the tire before the mounting on the approved rim, the position of the radially outer end of the cord reinforcing layer inward in the widthwise direction of the tire is positioned outward from the center of the arc defining the recess in the radial direction, whereby the fallen down deformation of a carcass region extending on the recess forming part under the action of a load can be suppressed to reduce quantities of compression strain and tensile strain generated in the recess forming part.
As a result, rubber fatigue is moderated during the rotation of the tire under a load to prevent the deterioration of the durability in the bead portion.

### BRIEF DESCRIPTION OF DRAWINGS

FIG. 1 is a widthwise sectional view of a half portion of an embodiment of the pneumatic tire according to the present invention at a state of mounting on an approved rim and inflating under a predetermined air pressure.
FIG. 2 is an enlarged sectional view of a main part showing a bead portion and a part of a sidewall portion of FIG. 1 in detail.
FIG. 3 is a widthwise sectional view of a half portion of another embodiment of the pneumatic tire according to the present invention before mounting on an approved rim.
FIG. 4 is a widthwise sectional view of a half portion of the other embodiment of the pneumatic tire according to the present invention at a state of mounting on an approved rim and inflating under a predetermined air pressure.
FIG. 5 is an enlarged sectional view of a main part showing a bead portion and a part of a sidewall portion of FIG. 4.
FIG. 6 is a widthwise sectional view of a half portion of the other embodiment of the pneumatic tire according to the present invention at a state of mounting on an approved rim and inflating under a predetermined air pressure.
FIG. 7 is an enlarged sectional view of a main part showing a bead portion and a part of a sidewall portion of FIG. 6.
FIG. 8 is an enlarged sectional view of a main part of showing a bead portion and a part of a sidewall portion of the conventional pneumatic tire.

### DESCRIPTION OF REFERENCE SYMBOLS

- 1, 21, 41: tread portion

- 2, 22, 42: sidewall portion
- 3, 23, 43: bead portion
- 4, 24, 44, 64: bead core
- 5, 25, 45, 65: carcass
- 5a, 25a, 45a, 65a: main body portion
- 5b, 25b, 65b,: turnup portion
- 45b: wound portion
- 5c, 25c: radially outer end
- 6, 26, 46: belt
- 7, 27, 47: tread rubber
- 8, 28, 48: cord reinforcing layer
- 8a, 28a, 48a: radially outer end located outside in widthwise direction
- 8b, 28b, 48b: radially outer end located inside in widthwise direction
- 9, 29, 50, 60: side rubber
- 10, 30, 51, 61: recess
- 10a, 30a, 51a: radially outer end
- 10b, 30b, 51b: radially inner end
- 49, 69: stiffener rubber
- 62: sandwiched rubber
- R: approved rim
- Rf: rim flange

### BEST MODE FOR CARRYING OUT THE INVENTION

The pneumatic tire according to the present invention will be described in detail with reference to the accompanying drawings below.

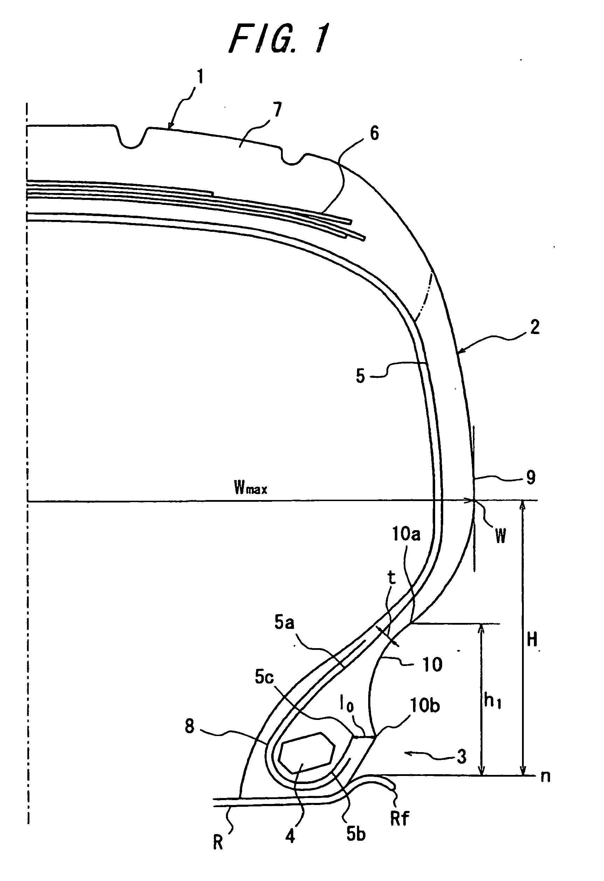

FIG. 1 is a widthwise sectional view of a half portion of an embodiment of the pneumatic tire according to the present invention at a state of mounting on an approved rim and inflating under a predetermined air pressure.

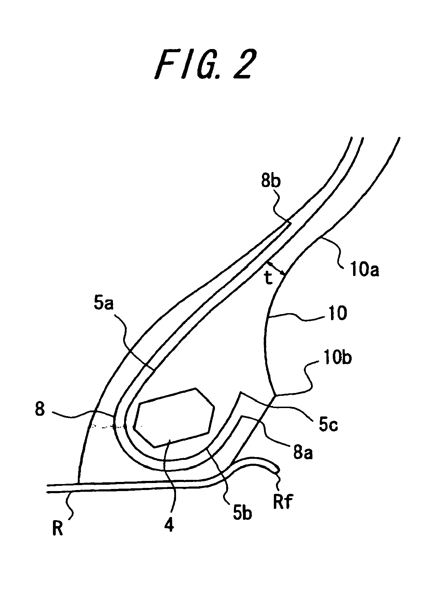

FIG. 2 is an enlarged sectional view of a main part showing a bead portion and a part of a sidewall portion of FIG. 1 in more detail.

In this figure, numeral 1 is a tread portion, numeral 2 a pair of sidewall portions each continuously extending from each side of the tread portion 1 inward in a radial direction, and numeral 3 a bead portion continuing inward from the sidewall portion 2 in the radial direction.

In the illustrated pneumatic tire, carcass 5 comprised of one carcass ply comprises a main body portion 5a toroidally extending between a pair of bead cores 4 with a hexagonal cross section each embedded in the respective bead portion 3 and a turnup portion 5b wound around the bead core 4 from inside to outside in a widthwise direction of the tire.
Here, the carcass ply can be made, for example, from steel cords, organic fiber cords or the like extending in a direction perpendicular to the circumferential direction of the tire.

It is common that a belt 6 and a tread rubber 7 are sequentially disposed on an outer circumferential side of a crown region of the carcass 5 in the tread potion 1, and a plurality of circumferential grooves extending in the circumferential direction of the tire are formed, for example, in the surface of the tread rubber 7.

Preferably, a cord reinforcing layer 8 is arranged outside the carcass 5 along the main body portion 5a and turnup portion 5b of the carcass 5 with respect to the bead core 4 of the bead portion 3.
Although the cord reinforcing layer 8 is one layer in the drawing, plural layers may be used.

In the sidewall portion 2 and bead portion 3 are covered the outside portions of the cord reinforcing layer 8 and carcass 5 in the widthwise direction of the tire with a side rubber 9 arranged along their outside surfaces.

In the pneumatic tire according to the present invention, a thin-walled recess 10 is formed inward from a tire maximum width position W in the radial direction of the tire and outward from a radially outer end 5c of the turnup portion 5b of the carcass so that a minimum size t of rubber gauge in the side rubber as measured in a normal direction drawn from the outermost carcass ply is within a range of 2.5 mm - 4.5 mm.

More preferably, a radially outer end 10a of the recess 10 is positioned at a distance h₁ within a range of 30-65% from a line segment n passing through an outer edge of a rim flange and parallel to a central axis of the tire with respect to a distance H from the line segment to the tire maximum width position in the radial direction, and a radially inner end 10b of the recess is positioned at a distance l₀ within a range of 3.0-10.0 mm outward from a radially outer end 5c of the turnup portion 5b of the carcass in the widthwise direction of the tire.

Preferably, when the radially outer end 10a of the recess is positioned within a range of 30-65% from the line segment n passing through an outer edge of a rim flange and parallel to a central axis of the tire with respect to the distance H from the line segment to the tire maximum width position in the radial direction, the radially outer end 10a of the recess 10 will avoid a region of increasing a bending deformation during the bending deformation of the tire, and hence the concentration of strain in the radially outer end 10a can be prevented.

When it is less than 30%, there is a fear that the bending deformation is concentrated in the recess 10, while when it exceeds 65%, there is a tendency that the radially outer end 10a begins at the occurrence of side crack.

In the posture of mounting the tire on an approved rim R, when the radially inner end 10b of the recess 10 is positioned within a range of 3.0-10.0 mm outward from the radially outer end 5c of the turnup portion of the carcass in the radial direction of the tire, ozone crack due to the deterioration of the tire and separation of the side rubber 9 can be prevented.

When it is less than 3.0 mm, there is a fear that ozone crack is generated in association with the deterioration of the tire or the separation is generated from the radially outer end 5c of the turnup portion 5b of the carcass and so on, while when it exceeds 10.0 mm, the deformation of thickness from the radially inner end 10b of the recess 10 to the vicinity of the radially outer end 5c, 25c of the turnup portion 5b of the carcass becomes large and the deformation in the radially inner end 10b of the recess 10 becomes large, and hence there is a tendency that the separation is generated in rubber along the carcass ply.

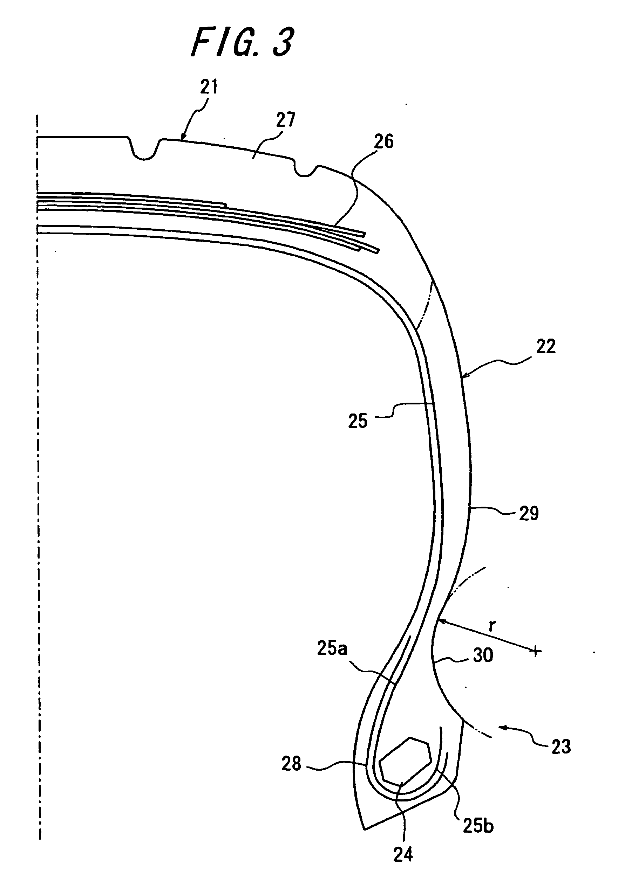

FIG. 3 is a widthwise sectional view of a half portion of another embodiment of the pneumatic tire according to the present invention before the mounting on an approved rim.

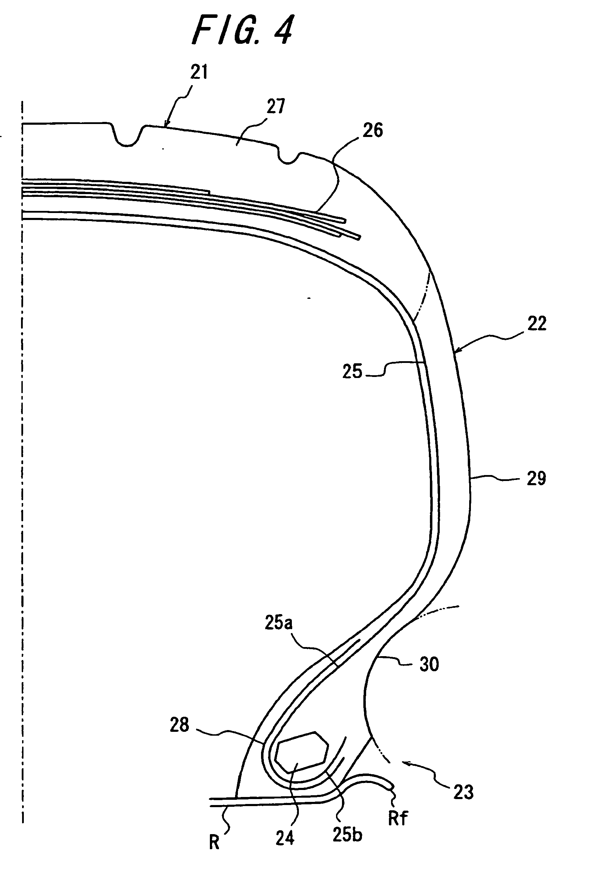

FIG. 4 is a widthwise sectional view of a half portion of the other embodiment of the pneumatic tire according to the present invention at a state of mounting on an approved rim and inflating under a predetermined air pressure.

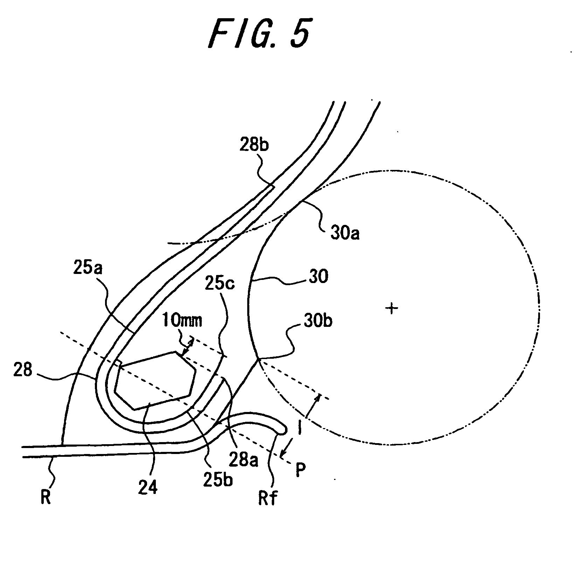

FIG. 5 is an enlarged sectional view of a main part showing a part of a bead portion of FIG. 4 in more detail.

In the posture of the tire before the mounting on the approved rim R, a recess 30 of a single arc having a center outside a carcass 25 in the widthwise direction of the tire and a radius r of curvature within a range of 10-200 mm is formed in a side rubber 29 on outer surfaces of a sidewall portion 22 and a bead portion 23.

Additionally, in the posture of the tire before the mounting on the approved rim R, a radially outer end 28b of the cord reinforcing layer 28 inside the tire in the widthwise direction is placed outward from the center of arc forming the recess in the radial direction.
Preferably, the radially outer end 28b is positioned within a range of 0 -30 mm outward from the center of curvature of the recess 30 in the radial direction.

In such a tire, the fall-down deformation of a portion of the carcass extending in the bead portion 23 under a load is suppressed based on an extension force of the cord reinforcing layer 28, whereby compression strain and tensile strain can be reduced in a region forming the recess 30. As a result, rubber fatigue during the rotation of the tire under a load can be moderated to suppress the deterioration of the durability of the bead portion 23.

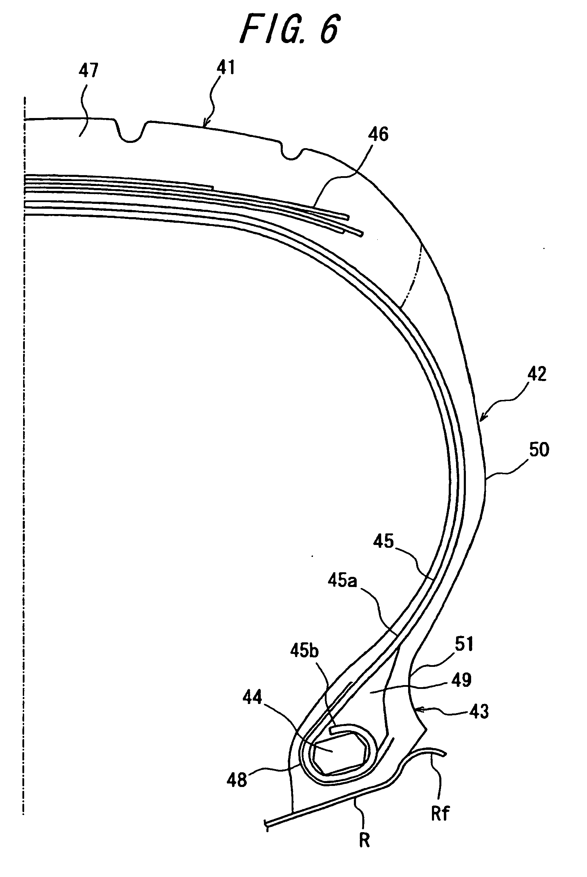

FIG. 6 is a widthwise sectional view of a half portion of the other embodiment of the pneumatic tire according to the present invention at a state of mounting on an approved rim and inflating under a predetermined air pressure.

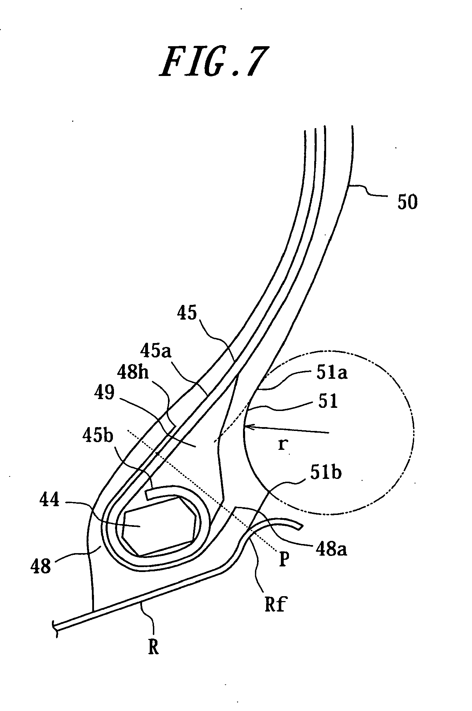

FIG. 7 is an enlarged sectional view of a main part showing a bead portion and a part of a sidewall portion of FIG. 6.

The illustrated pneumatic tire comprises a carcass 45 of one carcass ply toroidally extending between a pair of bead cores 44 with a hexagonal section each embedded in the respective bead portion 43. The carcass 45 is comprised of a main body portion 45a and a wound portion 45b wounded around the bead core 44 from inside to outside in the widthwise direction of the tire.

The wound portion 45b of carcass 45 acts so as to strongly restrain the carcass 45 to the bead core 44 to thereby effectively prevent the pulling-out of ply cords, while it also functions so as to eliminate a danger of generating separation failure to the wound portion.

The wound portion 45b of the carcass 45 before winding the carcass 45 around the bead core 44 is preferable to be constructed in such a way that end portions contributing to the formation of the wound portion 45b of steel cords as a ply cord forming the carcass ply are subjected to plastic processing at one or more places so as to extend along an outer peripheral surface of the bead core 44 or they are previously plastic-deformed into a desired form. Thus, it is possible to perform desired winding of the carcass 45 on the bead core 44 precisely.

And, the bead portion 43 is provided with a stiffener rubber 49 of substantially a triangular cross-sectional shape gradually decreasing a thickness on the bead core 44 along the carcass 45 outward in the radial direction.

In the sidewall portion 42 and bead portion 43, the outer portions of the carcass 45 and stiffener rubber 49 in the widthwise direction of the tire are covered with a side rubber 50 disposed along their outer surfaces.

Additionally, in the side rubber 50 on the outer surfaces of the sidewall portion 42 and bead portion 43 is formed a recess 51 of a single arc having a center positioned outside of the carcass 45 in the widthwise direction and a curvature radius r within a range of 10-200 mm inward from the tire maximum width position in the radial direction.

In such a tire, the carcass 45 is comprised of a main body portion 45a toroidally extending between the bead cores 44 each embedded in the respective bead portion 43 and a wound portion 45b wounded around the bead core 44 from outside to inside in the widthwise direction of the tire, and the recess 51 with desired size and shape having a center outward from the carcass 45 in the widthwise direction can be formed in the side rubber 50 on the outer surfaces of the sidewall portion 42 and bead portion 43. Since the recess 51 can be disposed in a portion having particularly a thicker rubber gauge near to the bead core 44, the hollowed amount of rubber in the recess 51 can be sufficiently increased to largely reduce the rubber amount of the side rubber 50 used, whereby the tire weight can be saved effectively.

Also, when the recess 30, 51 is defined by a single arc, the manufacture of the tire in a mold can be facilitated.

And, when the curvature radius r of the recess 30, 51 is within a range of 10-200 mm before the mounting on the approved rim, balance between weight reduction and durability of the bead portion can be secured.

When it is less than 10 mm, the tire is bent in the region forming the recess 30, 51, and compression strain becomes large when the bending deformation is caused in the bead portion, whereby the durability tends to be deteriorated. While, when it exceeds 200mm, the hollowed amount of rubber by the recess 30, 51 is decreased, so that there is a tendency that a percentage of weight reduction is small.

When the radially outer end 30a,51a of the recess 30, 51 before the mounting on the approved rim R is positioned in a contact point with the outer surface of the sidewall portion having a convex curved form outward in the widthwise direction of the tire, there is a tendency that the concentration of compression strain by the bending deformation of the bead portion the radially outer end 30a, 51a can be prevented and an appearance is not damaged.

When the radially inner end 10b, 30b, 51b of the recess is positioned within a range of 5-25 mm from an intersecting point of a perpendicular line P drawn from an arc center of a rim flange Rf of the approved rim R to the main body portion 5a, 25a, 45a of the carcass with the outer surface of the tire as measured along the tire outer surface outward in the radial direction, a place capable of most saving the weight in the bead portion can be specified.

When it is less than 5mm, an area of a portion contacting with the rim flange Rf of the approved rim R during the rotation under a load becomes small and the durability tends to be deteriorated. While, when it exceeds 25mm, the hollowed amount of rubber by the recess 30, 51 becomes small, and there is a tendency that percentage of weight reduction becomes small.

In is preferable that a position of a radially outer end 28a of the cord reinforcing layer 28 outward in the widthwise direction at the posture of mounting the tire on the approved rim R is positioned from an intersecting point of a perpendicular line P drawn from an arc center of the rim flange Rf of the approved rim R to the main body portion 25a of the carcass 25 with the outer surface of the tire up to a position of not less than 10 mm depart from a line segment drawn parallel to the perpendicular line P at a position of a radially outer end of the turnup portion 25b of the carcass 25 and inward in a direction perpendicular to the line segment in the radial direction.

When the radially outer ends 28a of the cord reinforcing layer 28 has such a construction, compression strain and tensile against the recess 30 can be reduced by the cord reinforcing layer 28.

When the position of the radially outer ends 28a is inward from the perpendicular line P in the radial direction, a portion in the vicinity of the approved rim R easily causing the fall-down deformation and having a thin rubber gauge can not be covered with the cord reinforcing layer 28 and the deformation is locally concentrated, so that there is a tendency that the effect of suppressing the fall-down deformation of the inner portion in the widthwise direction can not be developed. While, when it is a position of less than 10 mm depart from the line segment passing through the wound end and parallel to the perpendicular line P inward in the radial direction, the cord reinforcing layer 28 extends to a place forming the recess 30, so that there is a fear that strain due to stepwise difference of stiffness is concentrated.

More preferably, the cord reinforcing layer 8, 28, 48 is a rubberized layer of steel cords, and a cord angle of the cord reinforcing layer 8, 28, 48 arranged along the carcass 5, 25, 45 is 0-45° with respect to the radial direction.

When such a construction is taken, the fall-down deformation of the carcass 5, 25, 45 under loading can be suppressed by the cord reinforcing layer 8, 28, 48 more effectively.

When the cord angle exceeds 45°, there is a tendency that the cord is easily deformed to lower tension strength and the suppression of the fall-down deformation is lacking.

### EXAMPLE 1

There are prepared Example tire 1 having a structure as shown in FIGS. 6 and 7, Example tire 2 having a structure as shown in FIGS. 3-5 and Comparative Example tire 1 having a structure without a recess in side rubber, which have a tire size of 275/80R22.5, to evaluate the degree of reducing the weight of each tire.
Moreover, the tire structure of the comparative example tire other than the sidewall portion and bead portion is substantially the same as in the present invention because the modification is not required.

Each of Example tires 1, 2 and Comparative Example tire 1 is mounted on a rim having a rim size of 8.25x22.5 and a rim width of 21.0 cm (8.25 inches) under an internal pressure of 900 kPa, and the degree of weight reduction on Comparative Example tire 1 is evaluated to obtain a result as shown in Table 1.

**[Table 1]**

| | Example tire 1 | Example tire 2 | Comparative Example tire 1 |
|---|---|---|---|
| Degree of weight reduction (kg) | 4.5 | 2.1 | 0 |

As seen from the results of Table 1, the weight in Example tires 1, 2 can be largely reduced as compared with Comparative Example tire 1.

### EXAMPLE 2

There are prepared tires having a structure as shown in FIGS. 3-5 and a tire size of 275/80R22.5, dimensions of which are varied as shown in Table 2 for Example tires 3, 4 and Comparative Example tires 2, 3 to evaluate the durability of bead portion in each tire.
Moreover, the structure of the comparative example tires is substantially the same as in the example tire.

**[Table 2]**

| | | Example tire 3 | Example tire 4 | Comparative Example tire 2 | Comparative Example tire 3 |
|---|---|---|---|---|---|
| Cord reinforcing layer | position of radially outer end (mm) | 30(outward) | 20(outward) | - | 10(inward) |
| | position of radially outer end (mm) | 5(inward) | 5(inward) | 5(inward) | 5(inward) |
| | cord anglele(°) | 40 | 40 | 40 | 40 |
| Recess | curvature radius (mm) | 60 | 60 | 60 | 60 |
| | position of radially inner end (mm) | 8(outward) | 8(outward) | 8(outward) | 8(outward) |

Each of Example tires 3, 4 and Comparative Example tires 2, 3 is mounted on a rim having a rim size of 8.25x22.5 under an internal pressure of 900 kPa and set on a drum testing machine having a mass of 4225 kg and a diameter of 1.7 m, and run repeatedly on the drum testing machine at a test speed of 60 km/h to evaluate the durability capable of running until the occurrence and growth of cracks from the recess as shown in Table 3.
Moreover, the evaluation is conducted by an index on the basis that the value of Comparative Example tire 2 is 100, and the larger the numerical value, the better the result.

**[Table 3]**

| | Example tire 3 | Example tire 4 | Comparative Example tire 2 | Comparative Example tire 3 |
|---|---|---|---|---|
| durability | 110 | 120 | 100 | 100 |

As seen from the results of Table 3, the durability of the bead portion in Example tires 3, 4 is higher than those of Comparative Example tires 2, 3.

## Claims

1. A pneumatic tire comprising a tread portion (1, 21, 41), a pair of sidewall portions (2, 22, 24), a pair of bead portions (3, 23, 43), a carcass (5, 25, 45, 65) comprised of at least one carcass ply having a main body portion toroidally extending between bead cores (4, 24, 44, 64) each embedded in the respective bead portion and a turnup portion (5b, 25b, 65b) wound around the bead core from inside to outside of tire in a width direction, and a side rubber (9, 29, 50, 60) arranged outside of the carcass in the width direction of the tire, **characterized in that**:
a thin-walled recess (10, 30, 51, 61) is formed inward from a tire maximum width position (W) in a radial direction and outward from a radially outer end (5c, 25c) of the turnup portion of the carcass at a posture of mounting the tire on an approved rim (R) so that a minimum size (t) of rubber gauge in the side rubber as measured in a normal direction drawn from the outermost carcass ply is within a range of 2.5 mm - 4.5 mm;
the thin-walled recess is defined by a single arc having a center positioned outward from the carcass in the widthwise direction; and
the recess has a curvature radius within a range of 10-200 mm before the mounting on an approved rim.

2. The pneumatic tire according to claim 1, wherein a radially outer end (10a, 30a, 51a) of the recess in the widthwise section of the tire is positioned within a range of 30-65% of a distance ranging from a line segment passing through an outer edge of a rim flange (Rf) and extending parallel to a central axis of the tire to the tire maximum width position as measured from the line segment.

3. The pneumatic tire according to claim 1 or 2, wherein a radially inner end (10b, 30b, 51b) of the recess is positioned within a range of 3.0-10.0 mm from a radially outer end of the turnup portion of the carcass outward in the widthwise direction of the tire.

4. The pneumatic tire according to any one of claims 1 to 3, wherein a radially outer end of the recess in the widthwise section of the tire before the mounting on an approved rim is positioned in a contact point with an outer surface of the sidewall portion having a convex curved form outward in the widthwise direction of the tire.

5. The pneumatic tire according to any one of claims 1 to 4, wherein a radially inner end of the recess at a posture of mounting the tire on an approved rim is positioned within a range of 5-25 mm from an intersecting point of a perpendicular line drawn from an arc center of a rim flange of the approved rim to the main body portion of the carcass with an outer surface of the tire as measured in the tire width direction as measured along the tire outer surface outward in the radial direction.

6. The pneumatic tire according to any one of claims 1 to 5, wherein at least one cord reinforcement layer (8, 28, 48) for the bead core is disposed outside of the carcass along the carcass and a position of a radially outer end (8b, 28b, 48b) of the cord reinforcing layer located inside in the widthwise direction of the tire at the posture of the tire before the mounting on the approved rim is positioned outward from a center of the arc defining the recess in the radial direction.

7. The pneumatic tire according to claim 6, wherein a position of a radially outer end (8a, 28a, 48a) of the cord reinforcing layer outward in the widthwise direction at the posture of mounting on the approved rim is positioned from an intersecting point of a perpendicular line drawn from an arc center of a rim flange of the approved rim to the main body portion of the carcass with the outer surface of the tire up to a position of not less than 10 mm depart from a line segment drawn parallel to the perpendicular line at a position of a radially outer end of the carcass and inward in a direction perpendicular to the line segment.

8. The pneumatic tire according to claim 6 or 7, wherein the cord reinforcing layer is a rubberized layer of steel cords and a cord angle of the cord reinforcing layer is 0-45° with respect to the radial direction.

## Patentansprüche

1. Luftreifen, der aufweist: einen Laufflächenabschnitt (1, 21, 41); ein Paar Seitenwandabschnitte (2, 22, 24); ein Paar Wulstabschnitte (3, 23, 43); eine Karkasse (5, 25, 45, 65), die aus mindestens einer Karkassenlage besteht, die einen Hauptkörperabschnitt aufweist, der sich ringförmig zwischen Wulstkernen (4, 24, 44, 64), die jeweils im jeweiligen Wulstabschnitt eingebettet sind, und einem Umstülpbereich (5b, 25b, 65b) erstreckt, der um den Wulstkern von der Innenseite zur Außenseite des Reifens in einer Breitenrichtung gewickelt ist; und einen Seitengummi (9, 29, 50, 60), der außerhalb der Karkasse in der Breitenrichtung des Reifens angeordnet ist, **dadurch gekennzeichnet, dass**
eine dünnwandige Vertiefung (10, 30, 51, 61) nach innen von einer maximalen Breitenposition (W) des Reifens in einer radialen Richtung und nach außen von einem radial äußeren Ende (5c, 25c) des Umstülpbereiches der Karkasse in einer Montagestellung des Reifens auf einer zugelassenen Felge (R) gebildet wird, so dass eine minimale Abmessung (t) der Gummidicke im Seitengummi, gemessen in einer normalen Richtung, die von der äußersten Karkassenlage gezogen wird, innerhalb eines Bereiches von 2,5 mm bis 4,5 mm liegt;
die dünnwandige Vertiefung durch einen einzigen Bogen mit einem Mittelpunkt definiert wird, der nach außen hin von der Karkasse in der Breitenrichtung positioniert ist; und
die Vertiefung einen Krümmungsradius innerhalb eines Bereiches von 10 bis 200 mm vor dem Montieren auf eine zugelassene Felge aufweist.

2. Luftreifen nach Anspruch 1, bei dem ein radial äußeres Ende (10a, 30a, 51a) der Vertiefung im Schnitt des Reifens in der Breitenrichtung innerhalb eines Bereiches von 30 bis 65 % eines Abstandes positioniert ist, der sich von einer Strecke, die durch einen äußeren Rand eines Felgenflansches (Rf) passiert und sich parallel zu einer Mittelachse des Reifens erstreckt, bis zu einer maximalen Breitenposition des Reifens bewegt, gemessen von der Strecke aus.

3. Luftreifen nach Anspruch 1 oder 2, bei dem ein radial inneres Ende (10b, 30b, 51b) der Vertiefung innerhalb eines Bereiches von 3,0 bis 10,0 mm von einem radial äußeren Ende des Umstülpbereiches der Karkasse nach außen in der Breitenrichtung des Reifens positioniert ist.

4. Luftreifen nach einem der Ansprüche 1 bis 3, bei dem ein radial äußeres Ende der Vertiefung im Schnitt des Reifens in der Breitenrichtung vor dem Montieren auf eine zugelassene Felge in einem Kontaktpunkt mit einer äußeren Fläche des Seitenwandabschnittes positioniert wird, der eine konvexe gebogene Form nach außen in der Breitenrichtung des Reifens aufweist.

5. Luftreifen nach einem der Ansprüche 1 bis 4, bei dem ein radial inneres Ende der Vertiefung in einer Montagestellung des Reifens auf einer zugelassenen Felge innerhalb eines Bereiches von 5 bis 25 mm von einem Schnittpunkt einer senkrechten Linie, die von einer Bogenmitte eines Felgenflansches der zugelassenen Felge zum Hauptkörperabschnitt der Karkasse gezogen wird, mit einer äußeren Fläche des Reifens, gemessen in der Breitenrichtung des Reifens, positioniert wird, die längs der Außenfläche des Reifens nach außen in der radialen Richtung gemessen wird.

6. Luftreifen nach einem der Ansprüche 1 bis 5, bei dem mindestens eine Kordverstärkungslage (8, 28, 48) für den Wulstkern außerhalb der Karkasse längs der Karkasse angeordnet wird, und wobei eine Position eines radial äußeren Endes (8b, 28b, 48b) der Kordverstärkungslage, die im Inneren in der Breitenrichtung des Reifens in der Stellung des Reifens vor dem Montieren auf die zugelassene Felge angeordnet ist, nach außen von einer Mitte des Bogens positioniert wird, der die Vertiefung in der radialen Richtung definiert.

7. Luftreifen nach Anspruch 6, bei dem eine Position eines radial äußeren Endes (8a, 28a, 48a) der Kordverstärkungslage nach außen in der Breitenrichtung in der Montagestellung auf der zugelassenen Felge von einem Schnittpunkt einer senkrechten Linie, die von einer Bogenmitte eines Felgenflansches der zugelassenen Felge zum Hauptkörperabschnitt der Karkasse gezogen wird, mit der äußeren Fläche des Reifens bis zu einer Position von nicht weniger als 10 mm abweichend von einer Strecke positioniert wird, die parallel zur senkrechten Linie in einer Position eines radial äußeren Endes der Karkasse und nach innen in einer Richtung senkrecht zur Strecke gezogen wird.

8. Luftreifen nach Anspruch 6 oder 7, bei dem die Kordverstärkungslage eine gummierte Lage von Stahlkorden ist und ein Kordwinkel der Kordverstärkungslage 0 bis 45° mit Bezugnahme auf die radiale Richtung beträgt.

## Revendications

1. Bandage pneumatique, comprenant une partie de bande de roulement (1, 21, 41), une paire de parties de flanc (2, 22, 24), une paire de parties de talon (3, 23, 43), une carcasse (5, 25, 45, 65), étant constituée d'au moins une nappe de carcasse comportant une partie de corps principale s'étendant toroïdalement entre des tringles (4, 24, 44, 64), noyées chacune dans la partie de talon respective, et une partie retournée (5b, 25b, 65b) enroulée autour de la tringle, de l'intérieur vers l'extérieur du bandage pneumatique dans une direction de la largeur, et une gomme de flanc (9, 29, 50, 60) agencée à l'extérieur de la carcasse, dans la direction de la largeur du bandage pneumatique, **caractérisé en ce que**
un évidement à parois minces (10, 30, 51, 61) est formé vers l'intérieur d'une position à largeur maximale du bandage pneumatique (W), dans une direction radiale, et vers l'extérieur d'une extrémité radialement externe (5c, 25c) de la partie retournée de la carcasse, dans une posture de montage du bandage pneumatique sur une jante approuvée (R), de sorte qu'une dimension minimale (t) de l'épaisseur de la gomme dans la gomme de flanc, mesurée dans une direction normale s'étendant à partir de la nappe de carcasse la plus externe, est comprise dans un intervalle allant de 2,5 mm à 4,5 mm ;
l'évidement à parois minces est défini par un seul arc comportant un centre positionné vers l'extérieur de la carcasse, dans la direction de la largeur ; et
l'évidement a un rayon de courbure compris dans un intervalle allant de 10 à 200 avant le montage sur une jante approuvée.

2. Bandage pneumatique selon la revendication 1, dans lequel une extrémité radialement externe (10a, 30a, 51a) de l'évidement, dans la section dans le sens de la largeur du bandage pneumatique, est positionnée dans un intervalle représentant 30 à 65% d'une distance entre un segment de ligne passant à travers un bord externe d'un rebord de jante (Rf) et s'étendant parallèlement à un axe central du bandage pneumatique, et la position à largeur maximale du bandage pneumatique, mesurée à partir du segment de ligne.

3. Bandage pneumatique selon les revendications 1 ou 2, dans lequel une extrémité radialement interne (10b, 30b, 51b) de l'évidement est positionnée à une distance comprise dans le cadre d'un intervalle allant de 3,0 à 10,0 mm d'une extrémité radialement externe de la partie retournée de la carcasse, vers l'extérieur dans la direction de la largeur du bandage pneumatique.

4. Bandage pneumatique selon l'une quelconque des revendications 1 à 3, dans lequel une extrémité radialement externe de l'évidement, dans la section dans le sens de la largeur du bandage pneumatique, avant le montage sur une jante approuvée, est positionnée au niveau d'un point de contact avec une surface externe de la partie de flanc, ayant une forme à courbure convexe vers l'extérieur dans la direction de la largeur du bandage pneumatique.

5. Bandage pneumatique selon l'une quelconque des revendications 1 à 4, dans lequel une extrémité radialement interne de l'évidement, dans une posture de montage du bandage pneumatique sur une jante approuvée, est positionnée à une distance comprise entre 5 et 25 mm d'un point d'intersection entre une ligne perpendiculaire, tracée à partir d'un centre de l'arc d'un rebord de jante de la jante approuvée vers la partie de corps principale de la carcasse, et une surface externe du bandage pneumatique, mesurée dans la direction de la largeur du bandage pneumatique, mesurée le long de la surface externe du bandage pneumatique, vers l'extérieur dans la direction radiale.

6. Bandage pneumatique selon l'une quelconque des revendications 1 à 5, dans lequel au moins une couche de renforcement de câblés (8, 28, 49) pour la tringle est agencée à l'extérieur de la carcasse, le long de la carcasse, une position d'une extrémité radialement externe (8b, 28b, 48b) de la couche de renforcement de câblés agencée à l'intérieur dans la direction de la largeur du bandage pneumatique, dans une posture du bandage pneumatique avant le montage sur la jante approuvée, étant positionnée vers l'extérieur d'un centre de l'arc définissant l'évidement dans la direction radiale.

7. Bandage pneumatique selon la revendication 6, dans lequel une position d'une extrémité radialement externe (8a, 28a, 48a) de la couche de renforcement de câblés, vers l'extérieur dans la direction de la largeur, dans la posture de montage sur la jante approuvée, s'étend d'un point d'intersection entre une ligne perpendiculaire, tracée à partir d'un centre de l'arc d'un rebord de jante de la jante approuvée, vers la partie de corps principale de la carcasse, et la surface externe du bandage pneumatique, jusqu'à une position écartée de pas moins de 10 mm d'un segment de ligne tracé parallèlement à la ligne perpendiculaire, au niveau d'une position d'une extrémité radialement externe de la carcasse et vers l'intérieur, dans une direction perpendiculaire au segment de ligne.

8. Bandage pneumatique selon les revendications 6 ou 7, dans lequel la couche de renforcement de câblés est une couche caoutchoutée de câblés d'acier, un angle de câblé de la couche de renforcement de câblés étant compris entre 0 et 45° par rapport à la direction radiale.
